(19) 

Europäisches
Patentamt
European
Patent Office
Office européen
des brevets

(11) **EP 3 872 656 A1**

(12) **EUROPEAN PATENT APPLICATION**

(43) Date of publication:
01.09.2021 Bulletin 2021/35

(51) Int Cl.:
**G06F 17/11** (2006.01)     **G06N 5/00** (2006.01)

(21) Application number: **21151104.3**

(22) Date of filing: **12.01.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.02.2020 JP 2020031406**

(71) Applicant: **FUJITSU LIMITED**
**Kanagawa 211-8588 (JP)**

(72) Inventor: **Koyama, Jumpei**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND PROGRAM**

(57)     An information processing apparatus includes a plurality of search units and a control unit. The plurality of search units configured to search for a ground state of energy values represented by a plurality of state variables by using temperature values different from each other. The control unit configured to exchange values of the plurality of state variables or the temperature values between a pair of search units including two search units included in the plurality of search units, based on an exchange probability corresponding to a pair of the energy values obtained by the pair of search units.

FIG. 1

EP 3 872 656 A1

**Description**

[Technical Field]

The embodiments discussed herein are related to an information processing apparatus, an information processing method, and a program.

[Background Art]

There is an information processing apparatus that calculates a multivariate optimization problem which the Neumann-type computer is not good at by replacing the optimization problem with an Ising model which is a model representing a behavior of spin of a magnetic body. The information processing apparatus searches for a ground state in which the value of the energy function corresponding to the problem is the minimum or the maximum, by, for example, a Markov chain Monte Carlo method such as a simulated annealing method or a replica exchange method. The ground state corresponds to the optimal solution of the optimization problem.

For example, there is a proposal for a method of designing a surface acoustic wave filter in which simulated annealing is applied to an optimization problem with an equivalent circuit as a design parameter. In the proposed design method, a maximum temperature and a minimum temperature in the temperature profile of simulated annealing are determined based on a result of investigation of the distribution shape of an error function for a surface acoustic wave filter design problem by a preliminary experiment.

There is also a proposal of a thermostatic chamber device for temperature parallel simulated annealing in which a state obtained by simulated annealing processing at a first temperature is stochastically exchanged with a state obtained by simulated annealing processing at a second temperature.

[Citation List]

[Patent Literature]

[PTL 1] Japanese Laid-open Patent Publication No. 2008-140210
[PTL 2] Japanese Laid-open Patent Publication No. 9-231197

[Summary of Invention]

[Technical Problem]

In a case where a stochastic search is performed by a plurality of search units in which temperature values are set as in the replica exchange method, it is not easy to appropriately determine the temperature values in accordance with a problem.

In one aspect, an object of the present embodiments is to provide an information processing apparatus, an information processing method, and a program that are capable of appropriately determining a temperature value.

[Effects of Invention]

In one aspect, a temperature value may be appropriately determined.

[Brief Description of Drawings]

FIG. 1 is a diagram for describing an information processing apparatus according to a first embodiment;
FIG. 2 is a diagram illustrating an example of a relationship between the number of iterations and the temperature value of each search unit;
FIG. 3 is a diagram illustrating an example of a relationship between a temperature value and an average energy value;
FIG. 4 is a diagram illustrating an example of an information processing apparatus according to a second embodiment;
FIG. 5 is a diagram illustrating an example of a temperature adjustment unit;

FIG. 6 is a diagram illustrating an example of temperature value adjustment;
FIG. 7 is a diagram illustrating a first example of processing of the temperature adjustment unit;
FIG. 8 is a diagram illustrating a second example of processing of the temperature adjustment unit;
FIG. 9 is a flowchart illustrating an example of overall control processing of replica exchange;
FIG. 10 is a flowchart illustrating an example of search processing;
FIG. 11 is a flowchart illustrating an example of data collection processing;
FIG. 12 is a flowchart illustrating an example of exchange control processing;
FIG. 13 is a diagram illustrating an example of an information processing system according to a third embodiment; and
FIG. 14 is a diagram illustrating an example of hardware of the information processing apparatus.

[Description of Embodiments]

Hereinafter, embodiments will be described with reference to the drawings.

[First Embodiment]

A first embodiment will be described.

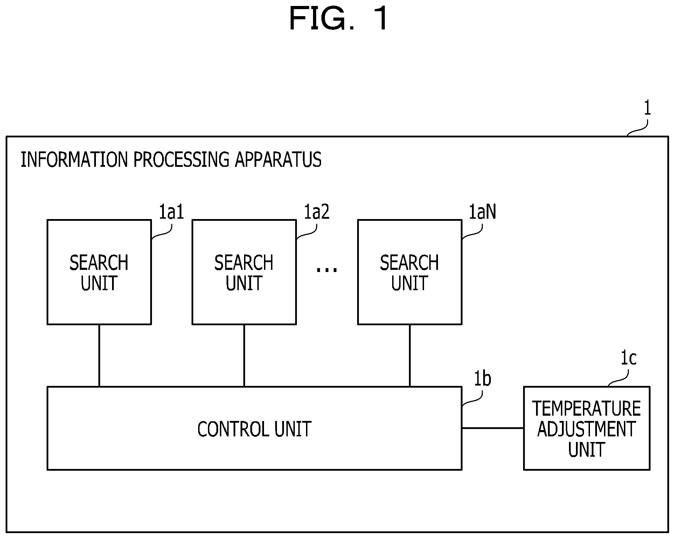

FIG. 1 is a diagram for describing an information processing apparatus according to the first embodiment.
An information processing apparatus 1 performs a search for the lowest energy state of the Ising model, for example, the ground state, by the replica exchange method based on an Ising-type energy function that formulates the combinatorial optimization problem. The ground state corresponds to the optimal solution of the combinatorial optimization problem. The energy function represents an energy value corresponding to a state represented by values of a plurality of state variables, and is also referred to as an evaluation function or an objective function. The state variable is a binary variable having a value of "0" or "1".
The Ising-type energy function E(x) is expressed by, for example, equation (1).
[Equation 1]

$$E(\boldsymbol{x}) = -\sum_{\langle i,j \rangle} W_{ij} x_i x_j - \sum_i b_i x_i \qquad (1)$$

The state vector x includes a plurality of state variables as elements and represents the state of the Ising model. In a case of a problem of maximizing energy, the sign of the energy function may be reversed.
The first term on the right side of equation (1) adds up the products of values of two state variables and coupling coefficients without omission and duplication for all combinations of two state variables that are selectable from all state variables. $x_i$ is an i-th state variable. $x_j$ is a j-th state variable. $W_{ij}$ is a weight coefficient indicating the weight, or the strength of coupling, between the i-th state variable and the j-th state variable.
The second term on the right side of equation (1) is a sum of the products of respective bias coefficients for all state variables and values of the state variables. $b_i$ indicates the bias coefficient for the i-th state variable.
For example, a spin "-1" in the Ising model corresponds to a value "0" of the state variable. A spin "+1" in the Ising model corresponds to a value "1" of the state variable. Therefore, the state variable may also be referred to as a bit having a value of 0 or 1.
The information processing apparatus 1 includes search units 1a1, 1a2, ..., 1aN, a control unit 1b, and a temperature adjustment unit 1c. The information processing apparatus 1 is realized by using, for example, a semiconductor integrated circuit such as a field-programmable gate array (FPGA). In this case, a search circuit, a control circuit, and a temperature adjustment circuit realized by using the semiconductor integrated circuit function as the search units 1a1, 1a2, ..., 1aN, the control unit 1b and the temperature adjustment unit 1c, respectively.
Each of the search units 1a1 to 1aN searches for the ground state of the energy value represented by the plurality of state variables by using temperature values different from each another. N is the number of search units. Each of the search units 1a1 to 1aN may be referred to as a replica. A temperature value is a value of temperature.
A Metropolis method or a Gibbs method is used to determine a probability of transition from a certain state to the next state when a certain state variable, for example, a bit, changes. For example, each of the search units 1a1 to 1aN determines whether to allow the change of the bit, based on a comparison result between an energy change when any bit of a plurality of bits is changed and a noise value. In a case where each of the search units 1a1 to 1aN determines to allow the change, the state transition occurs by changing the value of the bit. The noise value is obtained based on a temperature value or a random number. As the temperature value increases, the amplitude of the noise value increases.
The control unit 1b sets temperature values different from each other in the search units 1a1 to 1aN, respectively.

The control unit 1b sets a relatively high temperature value as the first maximum temperature value. The control unit 1b sets a relatively low temperature value as the first minimum temperature value. For example, the control unit 1b determines temperature values tmp[i] to be set in the search units 1a1 to 1aN based on equation (2) and (3).

[Equation 2]

$$tmp[i] = tmp\_min \cdot \exp\left(\frac{i}{denom}\right) \qquad (2)$$

[Equation 3]

$$denom = \frac{N-1}{\log\left(\frac{tmp\_max}{tmp\_min}\right)} \qquad (3)$$

i is an integer satisfying $0 \le i \le N-1$ and is an identification number for each of the search units 1a1 to 1aN. tmp_max is a maximum temperature value. tmp_min is a minimum temperature value. The control unit 1b calculates an initial temperature value to be set for each of the search units 1a1 to 1aN by equation (2) and (3) using the initial maximum temperature value and the initial minimum temperature value.

The control unit 1b causes the search units 1a1 to 1aN to start a search for the ground state. The control unit 1b obtains an energy value reached by each of the search units 1a1 to 1aN in the search in the predetermined period.

The control unit 1b exchanges the values of the plurality of state variables or the temperature values between a pair of search units based on an exchange probability calculated from a pair of energy values obtained by the pair of search units. Exchanging the values of the plurality of state variables or the temperature values between the pair of search units may be referred to as "replica exchange". An exchange probability p is expressed by equation (4).

[Equation 4]

$$p = \exp\left\{(E_i - E_j)\left(\frac{1}{kT_i} - \frac{1}{kT_j}\right)\right\} \qquad (4)$$

$E_i$ is an energy value obtained by an i-th search unit. $E_j$ is an energy value obtained by a j-th search unit. $T_i$ is a temperature value of the i-th search unit. $T_j$ is a temperature value of the j-th search unit. k is a Boltzmann constant. When the difference between temperature values is large, the exchange probability p tends to be low. Therefore, the control unit 1b may evaluate the exchange probability p only for pairs of search units corresponding to pairs of adjacent temperature values, and may determine whether to perform the replica exchange.

The temperature adjustment unit 1c determines temperature values based on the exchange probability p. For example, the temperature adjustment unit 1c determines both or any one of a maximum temperature value and a minimum temperature value among temperature values set by the control unit 1b.

For example, the temperature adjustment unit 1c acquires the exchange probability p for each pair of two adjacent temperature values in descending order of temperature value from the current maximum temperature value, and determines a new maximum temperature value based on the pair of temperature values in which the exchange probability p first becomes lower than a first threshold. In one example, the temperature adjustment unit 1c sets the larger one of the pair of temperature values in which the exchange probability p first becomes lower than the first threshold, as a new maximum temperature value. Note that, the temperature adjustment unit 1c may set the smaller one of the pair of temperature values in which the exchange probability p first becomes lower than the first threshold, as a new maximum temperature value. The first threshold is set in advance in the temperature adjustment unit 1c according to the problem.

For example, the temperature adjustment unit 1c acquires the exchange probability p for each pair of two adjacent temperature values in ascending order of temperature values from the current minimum temperature value, and determines a new minimum temperature value based on the pair of temperature values in which the exchange probability p first becomes higher than a second threshold. In one example, the temperature adjustment unit 1c sets the smaller one of the pair of temperature values for which the exchange probability p first becomes higher than the second threshold, as a new minimum temperature value. Note that, the temperature adjustment unit 1c may set the larger one of the pair of temperature values in which the exchange probability p first becomes higher than the second threshold, as a new minimum temperature value. The second threshold is set in advance in the temperature adjustment unit 1c according to the problem.

In order to determine the above-described temperature values, the temperature adjustment unit 1c may acquire the exchange probability p for each pair of temperature values from the control unit 1b, or the temperature adjustment unit 1c may acquire the energy values obtained by the search units 1a1 to 1aN and calculate the exchange probability p. For example, the temperature adjustment unit 1c may use an average of energy values obtained for a certain temperature value by the search units 1a1 to 1aN, for example, an average energy value, for the calculation of the exchange probability p. As the exchange probability p used for threshold determination, the temperature adjustment unit 1c may use an average value of the exchange probabilities p acquired a plurality of times within a certain period, or only the latest exchange probability p.

An example of a temperature value determined by the method of the comparative example will be described.

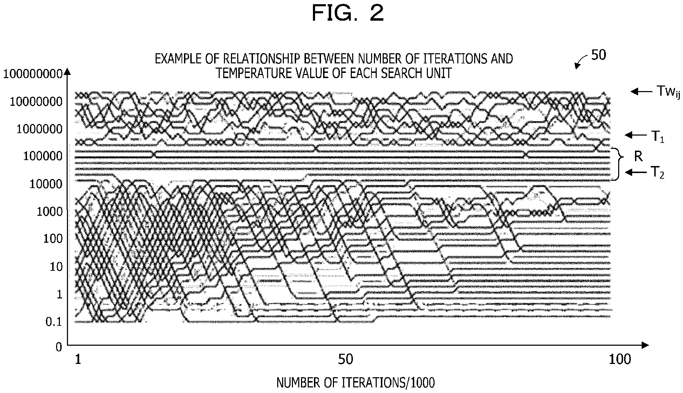

FIG. 2 is a diagram illustrating an example of a relationship between the number of iterations and the temperature value of each search unit.

Graph 50 illustrates an example of a relationship between the number of iterations and the temperature value of each search unit in the replica exchange method. One iteration corresponds to one state transition in each search unit. The horizontal axis of the graph 50 is the number of iterations/1000. The vertical axis of the graph 50 is the temperature value set in the search unit. The number of search units, for example, the number of replicas, is 40. One series in the graph 50 corresponds to one search unit (replica).

A temperature value $Tw_{ij}$ is the maximum temperature value used for the search illustrated in the graph 50. The minimum temperature value in the search is 0.1.

A portion in the graph 50 where the temperature value of the search unit changes corresponds to a timing at which replica exchange is performed. In the graph 50, when focusing on the frequency of replica exchange from the low temperature side, since the temperature value is too low in the search unit close to the minimum temperature region, exchange hardly occurs. As the temperature approaches an intermediate temperature zone from the minimum temperature region, replica exchange occurs. However, replica exchange hardly occurs in the temperature zone of an intermediate region R where the average energy value changes relatively greatly. In the graph 50, in the intermediate region R with the temperature values of about 10000 to 100000, almost no replica exchange occurs. In the maximum temperature region beyond the intermediate region R, replica exchange occurs substantially at random.

A temperature value $T_1$ is an appropriate maximum temperature value specified by manual investigation such as analysis of a problem by a user. The temperature value $T_1$ is a temperature value that is approximately the same as or slightly higher than the upper limit of the intermediate region R.

As described above, in a temperature zone relatively higher than the intermediate region R, replica exchange is frequently performed between search units in which temperature values belonging to the same temperature zone are set, and the temperature value set in the search unit may not easily decrease. In this case, the exchange processing in the relatively high temperature zone is merely a random walk and does not contribute to the search for the ground state. Therefore, in settings according to manual investigation by a user, the temperature value $T_1$ is determined so as to be a temperature value in the vicinity of the upper limit of the intermediate region R while removing such a relatively high temperature zone. This allows many search units to be allocated to the intermediate region R. Therefore, the difference between the average energy values of a pair of search units for a pair of two adjacent temperature values in the temperature zone corresponding to the intermediate region R decreases, and an increase in the exchange probability in the temperature zone corresponding to the intermediate region R is expected. As a result, state transition is appropriately facilitated, and solution performance by the search units 1a1 to 1aN is improved.

On the other hand, a temperature value $T_2$ is a maximum temperature value determined by the method of the comparative example. The temperature value $T_2$ is a temperature value in the vicinity of the lower limit of the intermediate region R.

In the method of the comparative example, the information processing apparatus 1 observes the temperature value set in the search unit and the minimum energy value reached by the search unit, and records the temperature value obtained when the minimum energy value is updated for each search unit. The information processing apparatus 1 generates a histogram of temperature values set when an arbitrary search unit updates the minimum energy value in a certain period, and sets a temperature value having the highest frequency in the histogram as a new maximum temperature value.

However, as illustrated in the graph 50, there is a temperature range in the intermediate region R in which replica exchange does not occur. Therefore, in the method of the comparative example, a relatively large number of search units for which a temperature lower than the intermediate region R is initially set do not reach the temperature value $T_1$ because a temperature equal to or higher than the intermediate region R is not set thereafter. Therefore, in the method of the comparative example based on the temperature transition in the search unit, it is not possible to obtain the temperature value $T_1$ as an appropriate maximum temperature value. For this reason, the temperature values set in the search units 1a1 to 1aN are not sufficiently high as the temperature value $T_1$, and are set to be low. As a result, state transition is delayed, and solution performance may not be sufficiently improved.

The tendency illustrated in the graph 50 may remarkably appear in a problem such as spin glass in which a relatively large number of tones have to be used to express a weight coefficient between bits. In the intermediate region R, the average energy value given by the Boltzmann distribution rapidly increases with an increase in the temperature value, and thus the exchange probability of replica exchange in the intermediate region R decreases. For example, in a problem in which the average energy rapidly increases with an increase in temperature, such as spin glass, it is difficult to estimate an appropriate maximum temperature value from the temperature transition of the search unit as in the method of the comparative example.

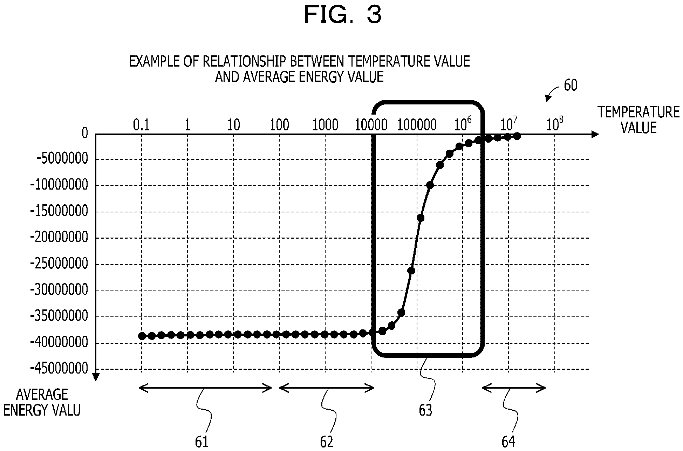

FIG. 3 is a diagram illustrating an example of a relationship between a temperature value and an average energy value.

Graph 60 illustrates an example of a relationship between a temperature value and an average energy value reached by a search unit in which the temperature value is set. The horizontal axis of the graph 60 is the temperature value. The horizontal axis of the graph 60 is a logarithmic scale. The vertical axis of the graph 60 is the average energy value.

A range 61 is a temperature zone near the minimum temperature value in which the exchange probability is low and replica exchange does not occur. A range 62 is a temperature zone on the higher temperature side than the range 61, and is a temperature zone with an exchange probability that the replica exchange occurs moderately. A range 63 is a temperature zone on the higher temperature side than the range 62, corresponds to the intermediate region R of the graph 50, has a low exchange probability, and is a temperature zone in which replica exchange does not occur. A range 64 is a temperature zone on the higher temperature side than the range 63, and is a temperature zone near the maximum temperature value in which the exchange probability p is very high and replica exchange occurs too frequently.

Therefore, as described above, the temperature adjustment unit 1c determines a maximum temperature value based on the exchange probability p of replica exchange such that the maximum temperature value is near the upper limit of the range 63. The first threshold is determined in advance such that the maximum temperature value is near the upper limit of the range 63. For example, when the first threshold is 0.01, the temperature adjustment unit 1c sets, as a new maximum temperature value, a temperature value at which the exchange probability p becomes lower than 0.01 for the first time in descending order of temperature from the temperature value $Tw_{ij}$ that is the maximum temperature value.

Thus, an appropriate temperature value near the temperature value $T_1$ in FIG. 2 may be determined as the new maximum temperature value. The control unit 1b may appropriately set the temperature values of the search units 1a1 to 1aN based on equation (2) and (3). With an increase in the number of search units allocated to the temperature zone of the range 63, for example, the intermediate region R, and a decrease in the difference in average energy value between the search units, exchange probability in the temperature zone increases. In this way, temperature transition of the search unit in the temperature zone is facilitated, and solution performance by the search units 1a1 to 1aN may be improved.

According to the graph 60, in the temperature zone on the lower temperature side than the range 63, each search unit substantially reaches the minimum energy value. As described above, in the temperature zone near the minimum temperature value lower than the range 62, the frequency of occurrence of replica exchange between the search units tends to be relatively low.

Therefore, the temperature adjustment unit 1c determines a minimum temperature value based on the exchange probability p, for example, such that the minimum temperature value is near the lower limit of the range 62. The second threshold is determined in advance such that the minimum temperature value is near the lower limit of the range 62. For example, when the second threshold is 0.01, the temperature adjustment unit 1c sets, as a new minimum temperature value, a temperature value at which the exchange probability becomes higher than 0.01 for the first time in ascending order of temperature from the minimum temperature value of 0.1.

Thus, a new minimum temperature value may be appropriately determined. The control unit 1b may appropriately set the temperature values of the search units 1a1 to 1aN based on equation (2) and (3). As a result, a low-temperature side temperature zone in which replica exchange hardly occurs is removed, and the search unit may search for a solution by taking various temperature values. For example, a large number of search units may be allocated to the temperature zone of the range 63, for example, the intermediate region R, set for each search unit, and the difference in average energy value between the search units decreases, so that exchange probability in the temperature zone increases. In this way, state transition is facilitated, and solution performance by the search units 1a1 to 1aN may be improved.

The first threshold and the second threshold to be compared with the exchange probability p are empirically determined values and may be set in the temperature adjustment unit 1c from the outside of the information processing apparatus 1. The first threshold and the second threshold may be the same value or may be different values.

The temperature adjustment unit 1c may determine only one of a maximum temperature value and a minimum temperature value or may determine both of the maximum temperature value and the minimum temperature value by the above-described method. In any case, the temperature values to be set for the search units 1a1 to 1aN may be appropriately determined.

[Second Embodiment]

Next, a second embodiment will be described.

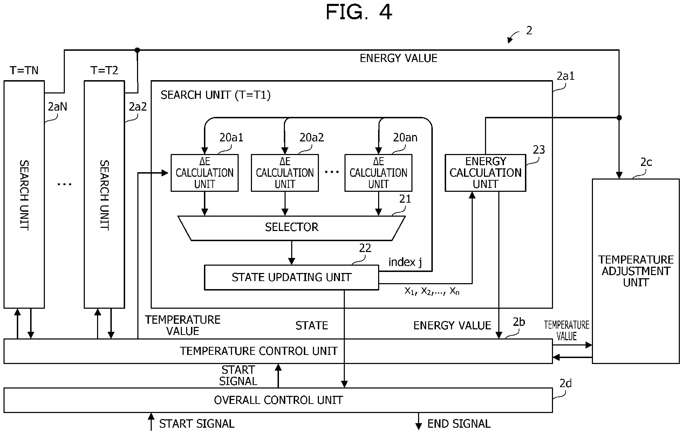

FIG. 4 is a diagram illustrating an example of an information processing apparatus according to the second embodiment.

Using the replica exchange method, an information processing apparatus 2 searches the combinations of the respective values of a plurality of bits corresponding to a plurality of spins included in the Ising model, obtained through conversion performed on the optimization problem of a calculation target, for a value of each bit obtained when the energy function is the minimum value. A combination of the values of the plurality of bits corresponds to a state of the Ising model, and a combination in which the energy function is the minimum value corresponds to the ground state of the Ising model. In the following description, a state of the Ising model may be simply referred to as a state. An Ising-type energy function $E(x)$ is defined by the above-described equation (1). The information processing apparatus 2 may also be referred to as an Ising machine, an optimization apparatus, or the like.

The information processing apparatus 2 is realized by using, for example, a semiconductor integrated circuit such as an FPGA. The information processing apparatus 2 includes search units 2a1 to 2aN, a temperature control unit 2b, a temperature adjustment unit 2c, and an overall control unit 2d.

The search units 2a1 to 2aN correspond to the search units 1a1 to 1aN of the first embodiment. N is an integer of 2 or larger and indicates the number of search units. The temperature control unit 2b is an example of the control unit 1b of the first embodiment. The temperature adjustment unit 2c is an example of the temperature adjustment unit 1c of the first embodiment.

Temperature values T1 to TN different from each other are set in the search units 2a1 to 2aN. The temperature values T1 to TN are determined, for example, based on equation (2) and (3) using a minimum temperature value tmp_min and a maximum temperature value tmp_max given in advance. Each of the search units 2a1 to 2aN realizes a ground state search based on an Ising-type evaluation function represented by equation (1) by such a circuit as described below. Description will be made below focusing on the search unit 2a1, and the search units 2a2 to 2aN have the similar circuit configuration.

The search unit 2a1 includes $\Delta E$ calculation units 20a1, 20a2, ..., 20an, a selector 21, a state updating unit 22, and an energy calculation unit 23. n is an integer of 2 or larger and indicates the total number of bits in the search unit 2a1.

Each of the $\Delta E$ calculation units 20a1 to 20an corresponds to one bit, and in response to a change of any bit, calculates an energy change value of a case where the own bit changes next, based on the weight coefficient of the changed bit and the own bit. Each of the $\Delta E$ calculation units 20a1 to 20an outputs, to the selector 21, a flag indicating whether to allow the own bit to be changed next, according to the comparison between the calculated energy change value and a noise value. The noise value is obtained based on a temperature value or a random number. As the temperature value increases, the amplitude of the noise value increases.

Based on the flag received from each of the $\Delta E$ calculation units 20a1 to 20an, the selector 21 selects a bit to be changed next from bits that are allowed to be changed next. For example, the selector 21 uses a random number to select a bit to be changed next from bits that are allowed to be changed next. The selector 21 outputs an index j of the selected bit to the state updating unit 22.

The state updating unit 22 holds a plurality of bits, for example, states. The state updating unit 22 updates a state by inverting the bit corresponding to the index j received from the selector 21.

The state updating unit 22 outputs the index j to the $\Delta E$ calculation units 20a1 to 20an. The state updating unit 22 outputs the current state, for example, bit strings $x_1$, $x_2$, ..., $x_n$, to the energy calculation unit 23. The state updating unit 22 outputs a state to the overall control unit 2d.

The energy calculation unit 23 calculates an energy value corresponding to the current state based on the current state received from the state updating unit 22 and the energy function. The energy calculation unit 23 outputs the calculated energy value to the temperature control unit 2b and the temperature adjustment unit 2c.

The temperature control unit 2b sets temperature values T1 to TN different from each other in the search units 2a1 to 2aN, respectively. For example, the temperature control unit 2b manages the temperature value of each search unit by holding, in a register in the temperature control unit 2b, first correspondence information in which the index of the search unit is associated with the index of the temperature value and second correspondence information in which the index of the temperature value is associated with the temperature value. When updating the temperature value, the temperature control unit 2b updates the temperature value in the second correspondence information.

In an initial predetermined period of the entire search period, the temperature control unit 2b calculates initial temperature values T1 to TN based on equation (2) and (3) using a minimum temperature value tmp_min and a maximum

7

temperature value tmp_max given in advance, and uses the initial temperature values T1 to TN. The initial predetermined period of the search is a period for temperature adjustment, for example, a temperature adjustment period.

The temperature control unit 2b causes the search units 2a1 to 2aN to start searching in accordance with a start signal received from the overall control unit 2d. The temperature control unit 2b acquires the energy value obtained by each of the search units 2a1 to 2aN after a predetermined number of iterations in each of the search units 2a1 to 2aN or after a predetermined time elapses from the start of the search. Based on the exchange probability p corresponding to the acquired energy value, the temperature control unit 2b exchanges temperature values between a pair of two search units in which adjacent temperature values are set. The exchange probability p is calculated by equation (4). The temperature control unit 2b may exchange states instead of temperature values.

The temperature control unit 2b outputs the temperature values T1 to TN to the temperature adjustment unit 2c. When the temperature adjustment period ends, the temperature control unit 2b acquires a new maximum temperature value tmp_max and a new minimum temperature value tmp_min from the temperature adjustment unit 2c. The temperature control unit 2b calculates new temperature values T1 to TN based on equation (2) and (3) by using the new maximum temperature value tmp_max and the new minimum temperature value tmp_min. The temperature control unit 2b sets the new temperature values T1 to TN in the search units 2a1 to 2aN, and starts the search after the temperature adjustment period.

In the temperature adjustment period, the temperature adjustment unit 2c calculates an exchange probability of replica exchange for each pair of adjacent temperature values at each timing of replica exchange or for each of a plurality of times of replica exchange, and holds the calculated exchange probability. When the temperature adjustment period ends, the temperature adjustment unit 2c updates the maximum temperature value tmp_max and the minimum temperature value tmp_min based on the exchange probability calculated for each pair of adjacent temperature values. The temperature adjustment unit 2c outputs the new maximum temperature value tmp_max and the new minimum temperature value tmp_min to the temperature control unit 2b.

When receiving a start signal for instructing the start of the search from the outside, the overall control unit 2d outputs the start signal to the temperature control unit 2b.

When the entire duration of the search by the search units 2a1 to 2aN ends, the overall control unit 2d acquires the state held by each of the search units 2a1 to 2aN. The overall control unit 2d outputs an end signal to the outside. For example, the end signal includes states finally obtained respectively by the search units 2a1 to 2aN or a state corresponding to the minimum energy value among the states. The overall control unit 2d may cause a display device coupled to the information processing apparatus 2 to display the information on the state or may transmit the information on the state to another computer coupled to the information processing apparatus 2 via a network.

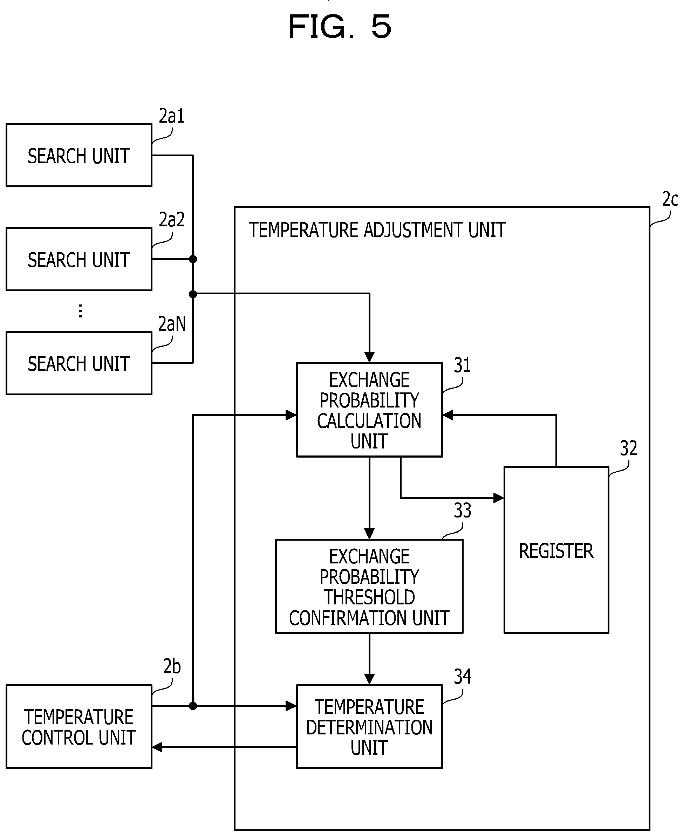

FIG. 5 is a diagram illustrating an example of a temperature adjustment unit.

The temperature adjustment unit 2c includes an exchange probability calculation unit 31, a register 32, an exchange probability threshold confirmation unit 33, and a temperature determination unit 34.

The exchange probability calculation unit 31 calculates the exchange probability p based on the energy value acquired from each of the search units 2a1 to 2aN and the temperature values T1 to TN acquired from the temperature control unit 2b. The exchange probability p is calculated by equation (4). The exchange probability calculation unit 31 may calculate the exchange probability p for a pair of adjacent temperature values. The exchange probability calculation unit 31 stores the exchange probability p calculated for each pair of temperature values in the register 32.

The exchange probability calculation unit 31 obtains an average value of the exchange probabilities p for pairs of temperature values in the temperature adjustment period. For this reason, for example, in a case of calculating the exchange probability p for the second time or later, the exchange probability calculation unit 31 may calculate an average value up to the current time by using an average value up to the previous time and store the average value in the register 32.

The register 32 stores the exchange probability p for each pair of temperature values calculated by the exchange probability calculation unit 31 or the average value of the exchange probabilities p.

The exchange probability threshold confirmation unit 33 compares the average value of the exchange probabilities p for pairs of temperature values in the temperature adjustment period, which is calculated by the exchange probability calculation unit 31, with a threshold. In the exchange probability threshold confirmation unit 33, a threshold (first threshold) for determining the maximum temperature value and a threshold (second threshold) for determining the minimum temperature value are set in advance.

The exchange probability threshold confirmation unit 33 compares the average value of the exchange probabilities p for pairs of temperature values in the temperature adjustment period with the first threshold in descending order of temperature values from the current maximum temperature value. The exchange probability threshold confirmation unit 33 outputs, to the temperature determination unit 34, the index of the larger temperature value of the pair of temperature values obtained when the average value of the exchange probabilities p is below the first threshold for the first time. This index is the index of a new maximum temperature value. Note that, the exchange probability threshold confirmation unit 33 may output the index of the smaller temperature value of the pair of temperature values obtained when the average value of the exchange probabilities p is below the first threshold for the first time, to the temperature determination unit 34.

The exchange probability threshold confirmation unit 33 compares the average value of the exchange probabilities p for pairs of temperature values in the temperature adjustment period with the second threshold in ascending order of temperature values from the current minimum temperature value. The exchange probability threshold confirmation unit 33 outputs, to the temperature determination unit 34, the index of the smaller temperature value of the pair of temperature values obtained when the average value of the exchange probabilities p exceeds the second threshold for the first time. This index is the index of a new minimum temperature value. Note that, the exchange probability threshold confirmation unit 33 may output the index of the larger temperature value of the pair of temperature values obtained when the average value of the exchange probabilities p exceeds the second threshold for the first time, to the temperature determination unit 34.

The temperature determination unit 34 acquires current temperature values T1 to TN and the indexes corresponding to the temperature values from the temperature control unit 2b. When the index of the new maximum temperature value is acquired from the exchange probability threshold confirmation unit 33, the temperature determination unit 34 determines, as the new maximum temperature value, a temperature value corresponding to the index of the new maximum temperature value among the current temperature values T1 to TN. When the index of the new minimum temperature value is acquired from the exchange probability threshold confirmation unit 33, the temperature determination unit 34 determines, as the new minimum temperature value, a temperature value corresponding to the index of the new minimum temperature value among the current temperature values T1 to TN. The temperature determination unit 34 outputs the new maximum temperature value and the new minimum temperature value to the temperature control unit 2b.

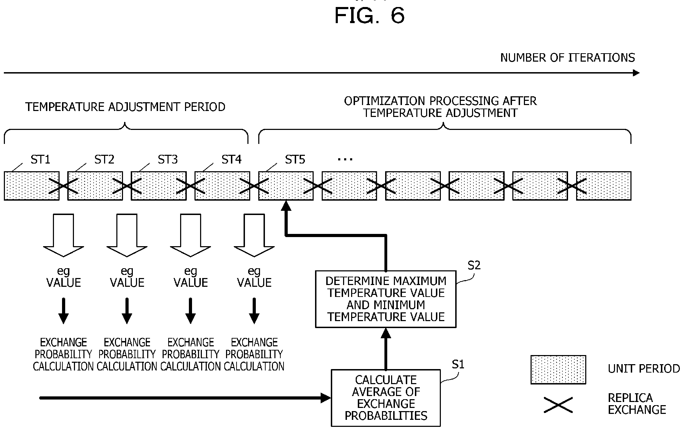

FIG. 6 is a diagram illustrating an example of temperature value adjustment.

The horizontal axis in FIG. 6 indicates the number of iterations. Each of unit periods ST1, ST2, ST3, ST4, ST5, ... is one unit of a search period in which a search is performed at a certain temperature by the search units 2a1 to 2aN. The unit period is defined as a predetermined number of iterations or a predetermined time interval. Replica exchange is performed in a time zone between the end time of a certain unit period and the start time of the next unit period. At this time, the state reached in the previous unit period is held in the corresponding search unit, and is taken over to the search in the next unit period. In the example of FIG. 6, a period including the unit periods ST1 to ST4 in the entire search period is a temperature adjustment period. A period starting from the unit period ST5 is a period in which a stochastic search after temperature adjustment, for example, optimization processing, is performed. In FIG. 6, the energy value may be abbreviated as "eg value".

In this case, the exchange probability calculation unit 31 calculates an exchange probability for a pair of adjacent temperature values based on the energy value acquired from the search units 2a1 to 2aN at a time immediately after the end of each of the unit periods ST1, ST2, ST3, ST4. At a time immediately after the end of the unit period ST4, the exchange probability calculation unit 31 calculates, for each pair of adjacent temperature values, an average of exchange probabilities each calculated in the unit periods ST1, ST2, ST3, ST4 (step S1). At a time immediately after the end of each of the unit periods ST1, ST2, ST3, ST4, the exchange probability calculation unit 31 may calculate an average of the exchange probabilities in the total unit periods up to that time. The exchange probability calculation unit 31 may acquire, as the energy value, an average of the energy values for the states into which each of the search units 2a1 to 2aN transition at the corresponding temperature values, for example, an average energy value, from the search units 2a1 to 2aN.

Before the unit period ST5, the exchange probability threshold confirmation unit 33 and the temperature determination unit 34 determine a new maximum temperature value and a new minimum temperature value based on comparison between the threshold and the average of exchange probabilities for each pair of adjacent temperature values calculated in step S1 (step S2). The temperature determination unit 34 outputs the new maximum temperature value and the new minimum temperature value to the temperature control unit 2b.

The temperature control unit 2b calculates temperature values T1 to TN according to equation (2) and (3) by using the new maximum temperature value and the new minimum temperature value, and sets the calculated temperature values T1 to TN in the search units 2a1 to 2aN, respectively. The temperature control unit 2b starts optimization processing in and after the unit period ST5 by the search units 2a1 to 2aN.

The number of unit periods included in the temperature adjustment period is four, but may be a different number. Calculation of exchange probability by the temperature adjustment unit 2c is performed at each timing of replica exchange, but may be performed every 2 or more times of replica exchange.

In FIG. 6, the temperature adjustment period is only an initial period of the entire period of the optimization processing, but the temperature adjustment period may be provided a plurality of times in the middle of the entire period. The temperature adjustment period may be periodically provided.

Next, an example of exchange probability calculation processing by the temperature adjustment unit 2c will be described in detail.

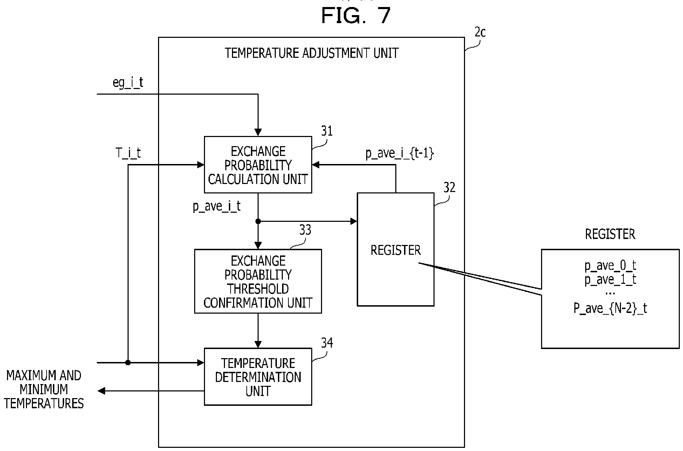

FIG. 7 is a diagram illustrating a first example of processing of the temperature adjustment unit.

The exchange probability calculation unit 31 receives an energy value eg_i_t from each of the search units 2a1 to 2aN. The energy value eg_i_t is an energy value corresponding to the state of an i-th search unit at a time t. The energy value eg_i_t may be an average energy value in the unit period immediately before the time t in the corresponding search unit.

The exchange probability calculation unit 31 receives temperature values T_i_t of the search units 2a1 to 2aN from the temperature control unit 2b. The temperature value T_i_t is a temperature value of the i-th search unit at the time t.

The exchange probability calculation unit 31 calculates an exchange probability p_i_t of replica exchange based on equation (4). For example, p_i_t = exp {(eg_i_t - eg_j_t)(1/(kT_i_t) - 1/(kT_j_t))}. i and j on the right side are a pair of indexes corresponding to a pair of adjacent temperature values.

The exchange probability calculation unit 31 calculates an average exchange probability p_ave_i_t by the following equation (5).

[Equation 5]

$$ p\_ave\_i\_t = \alpha \times p\_i\_t + (1 - \alpha) \times p\_ave\_i\_\{t - 1\} \qquad (5) $$

$\alpha$ is a real number satisfying $0 < \alpha < 1$ given in advance, and is, for example, $\alpha = 0.3$.

The exchange probability calculation unit 31 stores the average exchange probability p_ave_i_t at the time t in the register 32.

Since an exchange probability is calculated for a pair of adjacent temperature values, N-1 exchange probabilities are calculated in total. Therefore, if an index i in p_i_t and p_ave_i_t starts from 0, the index i takes values from 0 to N-2.

For example, the exchange probability calculation unit 31 calculates p_i_t and p_ave_i_t at a time immediately after the end of each of the unit periods ST1 to ST4, and stores p_ave_i_t in the register 32. The exchange probability calculation unit 31 outputs p_ave_i_t calculated at a time immediately after the end of the unit period ST4 in FIG. 6 to the exchange probability threshold confirmation unit 33.

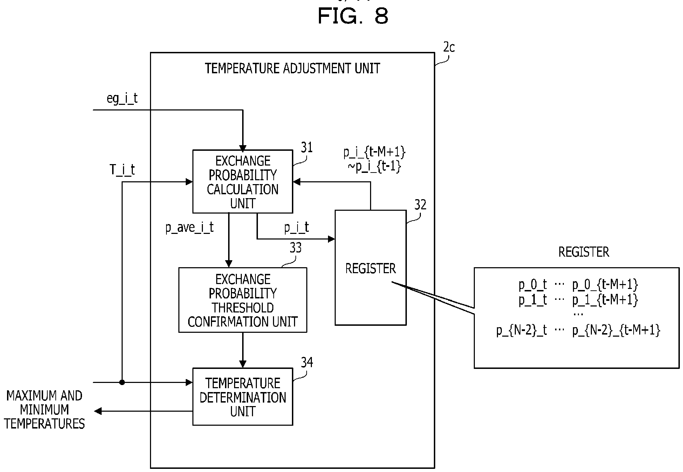

FIG. 8 is a diagram illustrating a second example of processing of the temperature adjustment unit.

The register 32 may store the exchange probability p_i_t calculated during a certain period M (for example, a period of t - M + 1 to t). In this case, the exchange probability calculation unit 31 executes the following processing.

The exchange probability calculation unit 31 receives an energy value eg_i_t from each of the search units 2a1 to 2aN. The energy value eg_i_t may be an average energy value in the unit period immediately before the time t in the corresponding search unit. The exchange probability calculation unit 31 receives temperature values T_i_t of the search units 2a1 to 2aN from the temperature control unit 2b.

The exchange probability calculation unit 31 calculates the exchange probability p_i_t of replica exchange based on equation (4). For example, p_i_t = exp {(eg_i_t - eg_j_t)(1/(kTJ_i_t) - 1/(kT_j_t))}. i and j on the right side are a pair of indexes corresponding to a pair of adjacent temperature values. The exchange probability calculation unit 31 stores the calculated exchange probability p_i_t in the register 32.

The exchange probability calculation unit 31 calculates the average exchange probability p_ave_i_t by the following equation (6).

[Equation 6]

$$ p\_ave\_i\_t = \frac{1}{M} \sum_{m=t-M+1}^{t} p\_i\_m \qquad (6) $$

The register 32 stores the exchange probability p_i_t calculated during a period from the time t - M + 1 to the time t.

Since an exchange probability is calculated for a pair of adjacent temperature values, N-1 exchange probabilities are calculated in total. Therefore, if the index i in p_i_t starts from 0, the index i takes values from 0 to N-2.

For example, the exchange probability calculation unit 31 calculates p_i_t at a time immediately after the end of each of the unit periods ST1 to ST4, and stores p_i_t in the register 32. The exchange probability calculation unit 31 calculates p_ave_i_t at a time immediately after the end of the unit period ST4 in FIG. 6, and outputs p_ave_i_t to the exchange probability threshold confirmation unit 33.

Next, an example of a processing procedure of the information processing apparatus 2 will be described.

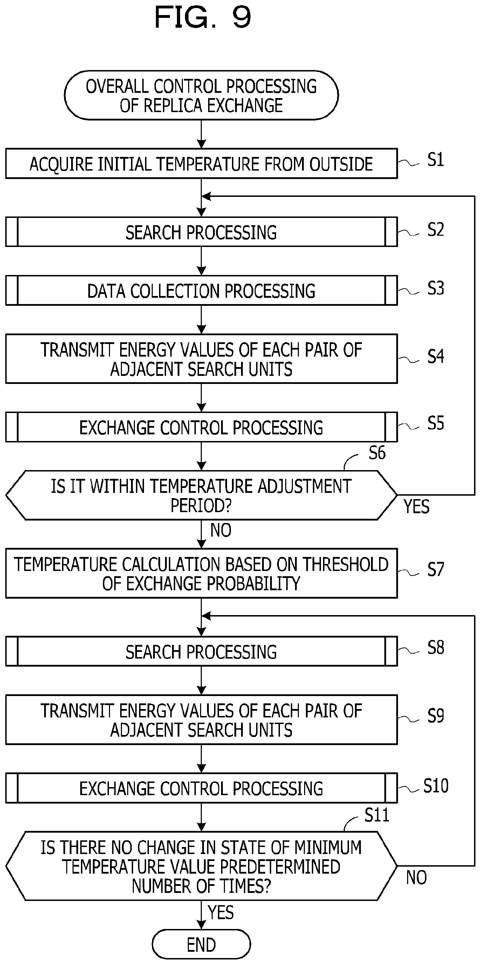

FIG. 9 is a flowchart illustrating an example of overall control processing of replica exchange.

(S1) The overall control unit 2d acquires temperature information indicating an initial temperature value as input data from the outside, and outputs the temperature information and a start signal to the temperature control unit 2b.

(S2) The temperature control unit 2b receives the start signal from the overall control unit 2d, sets initial temperature values T1 to TN different from each other in the search units 2a1 to 2aN, respectively, and causes the search units to execute a stochastic search. Details of the search processing by each of the search units 2a1 to 2aN will be described later.

(S3) When the search in the unit period is executed by each of the search units 2a1 to 2aN, the temperature adjustment unit 2c performs data collection processing including acquisition of the energy value calculated by each of the search units 2a1 to 2aN. Details of the data collection processing will be described later.

(S4) The search units 2a1 to 2aN transmit the energy values of each pair of adjacent search units to the temperature control unit 2b. For example, the temperature control unit 2b acquires the energy values calculated by the search units 2a1 to 2aN for each pair of search units having adjacent temperature values.

(S5) The temperature control unit 2b calculates an exchange probability based on equation (4), and performs exchange control processing on temperature values based on the exchange probability. The temperature control unit 2b performs the exchange control processing on temperature values for each pair of search units having adjacent temperatures. Details of the exchange control processing will be described later.

(S6) The temperature adjustment unit 2c determines whether a next unit period is within the temperature adjustment period. In a case where the next unit period is within the temperature adjustment period, the temperature adjustment unit 2c causes the processing to proceed to step S2. In a case where the next unit period is not within the temperature adjustment period, the temperature adjustment unit 2c causes the processing to proceed to step S7.

(S7) The temperature adjustment unit 2c performs temperature calculation based on the threshold of exchange probability. For example, the exchange probability threshold confirmation unit 33 acquires an average exchange probability for each pair of adjacent temperature values from the exchange probability calculation unit 31. The exchange probability threshold confirmation unit 33 acquires an index of a new maximum temperature value by comparing the average exchange probability for each pair of adjacent temperature values with the first threshold in descending order of temperature, and outputs the index to the temperature determination unit 34. The exchange probability threshold confirmation unit 33 acquires an index of a new minimum temperature value by comparing the average exchange probability for each pair of adjacent temperature values with the second threshold in ascending order of temperature, and outputs the index to the temperature determination unit 34. The temperature determination unit 34 determines the temperature value corresponding to the index of the new maximum temperature value as the new maximum temperature value, and outputs the new maximum temperature value to the temperature control unit 2b. The temperature determination unit 34 determines the temperature value corresponding to the index of the new minimum temperature value as the new minimum temperature value, and outputs the new minimum temperature value to the temperature control unit 2b.

(S8) The temperature control unit 2b calculates updated temperature values T1 to TN according to equation (2) and (3) by using the updated maximum temperature value and the updated minimum temperature value. The temperature control unit 2b sets the updated temperature values T1 to TN in the search units 2a1 to 2aN, and causes each of the search units 2a1 to 2aN to execute a stochastic search.

(S9) The search units 2a1 to 2aN transmit the energy values of each pair of adjacent search units to the temperature control unit 2b. For example, the temperature control unit 2b acquires the energy values calculated by the search units 2a1 to 2aN for each pair of search units having adjacent temperature values.

(S10) The temperature control unit 2b calculates an exchange probability based on equation (4), and performs exchange control processing on temperature values based on the exchange probability. The temperature control unit 2b performs the exchange control processing on temperature values for each pair of search units having adjacent temperatures.

(S11) The search units 2a1 to 2aN determine whether the state in the search unit with the minimum temperature value no longer changes a predetermined number of times. When there is no change in the state in the search unit with the minimum temperature value, the search units 2a1 to 2aN output the state to the overall control unit 2d, and end the overall control processing of replica exchange. In a case where there is a change in the bit state in the search unit with the minimum temperature value, the search units 2a1 to 2aN cause the processing to proceed to step S8 and continue processing of the stochastic search.

When acquiring the states finally obtained from the search units 2a1 to 2aN, the overall control unit 2d outputs an end signal to the outside. For example, the end signal includes states finally obtained respectively by the search units 2a1 to 2aN or a state corresponding to the minimum energy value among the states. The overall control unit 2d may cause a display device coupled to the information processing apparatus 2 to display the information on the state or may transmit the information on the state to another computer coupled to the information processing apparatus 2 via a network.

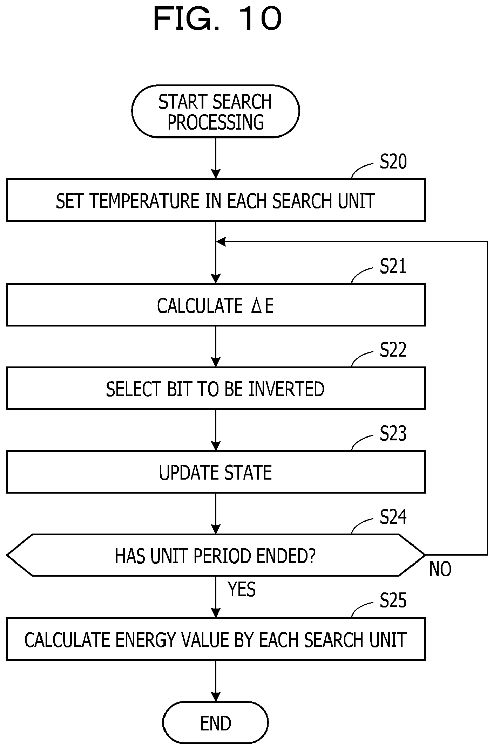

FIG. 10 is a flowchart illustrating an example of search processing.

The search processing corresponds to steps S2 and/or S8 in Fig. 9.

(S20) The temperature control unit 2b sets temperature values different from each other in the search units 2a1 to 2aN. Initial temperature values set respectively for the search units 2a1 to 2aN are determined in advance in accordance with a problem or the like. After the temperature values are updated in step S7, the updated temperature values are set in the search units 2a1 to 2aN.

(S21) Each of the search units 2a1 to 2aN calculates an energy change value $\Delta E$ for each bit.

(S22) Each of the search units 2a1 to 2aN selects a bit to be inverted based on the energy change value $\Delta E$ for each bit.

(S23) Each of the search units 2a1 to 2aN updates the state by inverting the bit selected in step S22.

(S24) Each of the search units 2a1 to 2aN determines whether the unit period has ended. In a case where the unit period has ended, each of the search units 2a1 to 2aN causes the processing to proceed to step S25. In a case where the unit period has not ended, each of the search units 2a1 to 2aN causes the processing to proceed to step S21. As described above, determination of whether the unit period has ended is made based on whether a predetermined number of iterations corresponding to the unit period has been reached or whether a predetermined time corresponding to the unit period has elapsed.

(S25) Each of the search units 2a1 to 2aN calculates an energy value corresponding to the current state. Each of the search units 2a1 to 2aN outputs the calculated energy value to the temperature control unit 2b and the temperature adjustment unit 2c, and ends the search processing.

In a case where an average energy value is provided to the temperature adjustment unit 2c, each of the search units 2a1 to 2aN may calculate the energy value a plurality of times within the unit period, calculate the average energy value within the unit period, and output the average energy value to the temperature adjustment unit 2c.

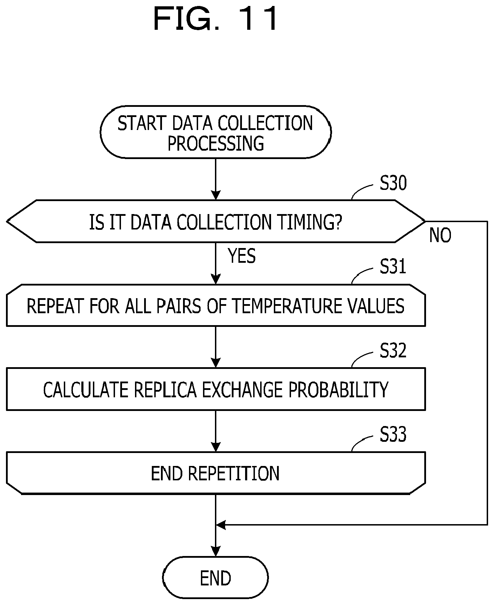

FIG. 11 is a flowchart illustrating an example of data collection processing.

The data collection processing corresponds to step S3 in Fig. 9.

(S30) The exchange probability calculation unit 31 determines whether it is a data collection timing. When it is the data collection timing, the exchange probability calculation unit 31 causes the processing to proceed to step S31. When it is not the data collection timing, the exchange probability calculation unit 31 ends the data collection processing. The data collection timing may be a timing for each completion of the search processing in a unit period by the search units 2a1 to 2aN, or may be a timing for each completion of the search processing in two or more unit periods. The data collection timing is set in the temperature adjustment unit 2c in advance.

(S31) The exchange probability calculation unit 31 repeatedly executes step S32 for all pairs of temperature values. A pair of temperature values is a pair of two adjacent temperature values.

(S32) The exchange probability calculation unit 31 calculates an exchange probability based on the energy values acquired from the search units 2a1 to 2aN and equation (4) for a pair of two adjacent temperature values. The exchange probability calculation unit 31 stores the calculated exchange probability in the register 32. As described above, the exchange probability calculation unit 31 may calculate an average exchange probability in step S32. In this case, the exchange probability calculation unit 31 stores the calculated average exchange probability in the register 32.

(S33) When the exchange probability calculation unit 31 has finished executing step S32 for all pairs of temperature values, the exchange probability calculation unit 31 ends the data collection processing.

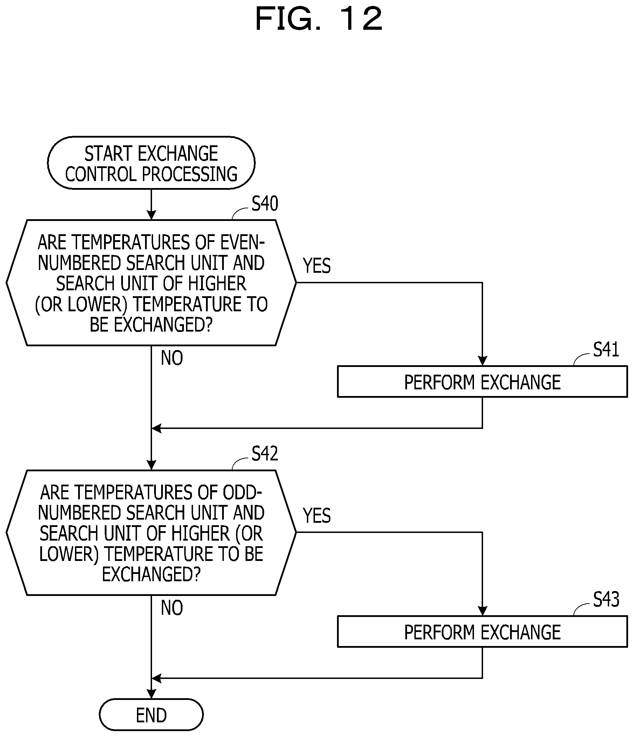

FIG. 12 is a flowchart illustrating an example of exchange control processing.

The exchange control processing corresponds to steps S5 and/or S10 in Fig. 9.

(S40) For even-numbered search units in ascending order (or descending order) of the temperature value, the temperature control unit 2b determines whether to exchange temperature values with the search unit with the adjacent higher (or lower) temperature based on the exchange probability of equation (4). The determination of temperature value exchange is performed for each pair of search units. In a case where there is a pair of search units that are determined to exchange the temperature values, the temperature control unit 2b causes the processing to proceed to step S41. In a case where there is no pair of search units that are determined to exchange the temperature values, the temperature control unit 2b causes the processing to proceed to step S42.

(S41) The temperature control unit 2b exchanges temperatures for the pair of search units determined to exchange the temperatures in step S40.

(S42) For odd-numbered search units in ascending order (or descending order) of the temperature value, the temperature control unit 2b determines whether to exchange temperature values with the search unit with the adjacent higher (or lower) temperature based on the exchange probability of equation (4). The determination of temperature value exchange is performed for each pair of search units. In a case where the temperature control unit 2b determines in step S40, for even-numbered search units, whether to exchange temperature values with the search unit with the higher temperature, the temperature control unit 2b determines in step S42, for odd-numbered search units, whether to exchange temperature values with the search unit with the higher temperature. In a case where the temperature control unit 2b determines in step S40, for even-numbered search units, whether to exchange temperature values with the search unit with the lower temperature, the temperature control unit 2b determines in step S42, for odd-numbered search units, whether to exchange temperature values with the search unit with the lower temperature. In a case where there is a pair of search units that are determined to exchange the temperature values, the temperature control unit 2b causes the processing to proceed to step S43. In a case where there is no pair of search units determined to exchange the temperature values, the temperature control unit 2b ends the exchange control processing.

(S43) The temperature control unit 2b exchanges temperature values for the pair of search units determined to exchange the temperature values in step S42. The temperature control unit 2b ends the exchange control processing.

In the above example, exchange control of temperature values is performed by focusing on odd-numbered search units after focusing on even-numbered search units, but exchange control of temperature values may be performed by focusing on even-numbered search units after focusing on odd-numbered search units. For example, steps S40 and S41 may be executed after steps S42 and S43. As described above, the temperature control unit 2b may exchange states instead of temperature values.

As described in FIG. 3, there is a temperature zone of the range 63 in the graph 60 in which the exchange probability of replica exchange decreases. On the other hand, in a temperature zone of the range 64 in the graph 60, there is a tendency that only the search units belonging to the same temperature zone frequently perform exchange with each other.

Therefore, as described above, the temperature adjustment unit 2c determines a maximum temperature value based on the exchange probability p of replica exchange such that the maximum temperature value is near the upper limit of the range 63. For example, when the first threshold for determining the maximum temperature value is 0.01, the temperature adjustment unit 2c sets, as a new maximum temperature value, a temperature value at which the exchange probability p becomes lower than 0.01 for the first time in descending order of temperature from the temperature value $Tw_{ij}$, which is the initial maximum temperature value.

In the temperature zone on a lower temperature side than the range 62 in the graph 60, the frequency of occurrence of replica exchange between the search units tends to be relatively low.

Therefore, the temperature adjustment unit 2c determines a new minimum temperature value based on the exchange probability p such that the minimum temperature value is near the lower limit of the range 62. For example, when the second threshold for determining the minimum temperature value is 0.01, the temperature adjustment unit 2c sets, as a new minimum temperature value, a temperature value at which the exchange probability becomes higher than 0.01 for the first time in ascending order of temperature from the initial minimum temperature value.

For example, the temperature adjustment unit 2c focuses on the replica exchange probability in each of a region near the minimum temperature value and a region near the maximum temperature value. Since the exchange probability increases from the minimum temperature value toward a higher temperature value, by setting a point at which the exchange probability becomes higher than a certain threshold as a new minimum temperature value, it is possible to omit search units that belong to a region near the minimum temperature value where the exchange probability is equal to or lower than the threshold. Since the exchange probability decreases from the maximum temperature value toward a lower temperature value, by setting a point at which the exchange probability becomes lower than a certain threshold as a new maximum temperature value, it is possible to omit search units that belong to a region near the maximum temperature value where the exchange probability is equal to or higher than the threshold.

In this way, a new maximum temperature value and a new minimum temperature value may be appropriately set. The temperature control unit 2b may appropriately set the temperature values of the search units 2a1 to 2aN based on equation (2) and (3). For example, it is possible to set an appropriate temperature even in a problem of spin glass or a problem in which a coefficient is enlarged and scaled.

As a result, the number of search units allocated to the temperature zone near the maximum temperature and the temperature zone near the minimum temperature of the initial temperature value is reduced, and many search units may be allocated to the intermediate temperature zone. The difference in average energy values between the search units in which temperature values belonging to the intermediate temperature zone are set becomes relatively small, and the exchange probability of replica exchange increases. This may facilitate temperature transition of the search unit and improve solution performance.

Since the information processing apparatus 2 may adaptively and automatically determine the temperature value that corresponds to a problem of spin glass or the like, it is possible to save a user's trouble of adjusting the temperature value. For example, adjustment of temperature values may be facilitated.

In summary, the information processing apparatus 2 has, for example, the following functions.

The temperature adjustment unit 2c compares the exchange probability of replica exchange with a threshold, and determines both or any one of a new maximum temperature value and a new minimum temperature value in accordance with the comparison. Thus, for example, temperature zones that are not used, such as a low temperature zone in which the probability is low and a high temperature zone in which the probability is low, may be reduced, and temperature values may be appropriately determined. It is possible to increase the exchange probability in the intermediate temperature zone in which the exchange probability decreases due to a problem of spin glass or the like, to promote temperature transition and state transition accompanying the temperature transition, and to improve solution performance.

The temperature adjustment unit 2c compares, in descending order of temperature values, the exchange probability corresponding to a pair of temperature values set for a pair of search units with the first threshold, and determines a maximum temperature value based on the exchange probability of the pair of search units in which the exchange probability becomes lower than the first threshold for the first time. For example, the temperature adjustment unit 2c sets, as the maximum temperature value, a temperature value at which the exchange probability of the pair of search units first becomes lower than the first threshold in descending order of temperature from the current maximum temperature value. For example, the temperature adjustment unit 2c determines the maximum temperature value based on the pair of temperature values corresponding to the pair of search units in which the exchange probability first becomes lower than the first threshold. In one example, the temperature adjustment unit 2c sets any one temperature value belonging to the pair of temperature values as the maximum temperature value. Alternatively, it is also considered that the temperature adjustment unit 2c sets a temperature value calculated from each temperature value belonging to the pair of temperature values, for example, an intermediate temperature value, as the maximum temperature value.

Thus, it is possible to omit a temperature zone in the vicinity of the initial maximum temperature in which the exchange probability is equal to or higher than the first threshold, and to improve the exchange probability in the intermediate temperature zone in which the exchange probability is low. As a result, temperature transition of each search unit is facilitated, and solution performance is improved.

The temperature adjustment unit 2c compares, in ascending order of temperature values, the exchange probability corresponding to a pair of temperature values set for a pair of search units with the second threshold, and determines a minimum temperature value based on the exchange probability of the pair of search units in which the exchange probability first becomes higher than the second threshold. For example, the temperature adjustment unit 2c sets, as the minimum temperature value, a temperature value at which the exchange probability of the pair of search units first becomes higher than the second threshold in ascending order of temperature from the current minimum temperature value. For example, the temperature adjustment unit 2c determines the minimum temperature value based on the pair of temperature values corresponding to the pair of search units in which the exchange probability first becomes higher than the second threshold. In one example, the temperature adjustment unit 2c sets any one temperature value belonging to the pair of temperature values as the minimum temperature value. Alternatively, it is also considered that the temperature adjustment unit 2c sets a temperature value calculated from each temperature value belonging to the pair of temperature values, for example, an intermediate temperature value, as the minimum temperature value.

Thus, it is possible to omit a temperature zone in the vicinity of the initial minimum temperature value in which the exchange probability is equal to or lower than the second threshold, and to improve the exchange probability in the intermediate temperature zone in which the exchange probability is low. As a result, temperature transition of each search unit is facilitated, and solution performance is improved.

It is more effective to determine both the maximum temperature value and the minimum temperature value by the temperature adjustment unit 2c.

The temperature adjustment unit 2c determines temperature values based on an average value of a plurality of exchange probabilities obtained within a predetermined period. By averaging the exchange probabilities, the exchange probability for the corresponding pair of temperature values may be appropriately evaluated, and the temperature value may be appropriately determined.

The temperature adjustment unit 2c calculates an exchange probability based on a pair of temperature values corresponding to a pair of search units and a pair of average energy values obtained by the pair of search units. Thus, it is possible to appropriately evaluate the tendency of the energy value obtained by the pair of search units in which the pair of corresponding temperature values is set, and to appropriately determine the temperature value.

The temperature control unit 2b updates the temperature values T1 to TN set in the search units 2a1 to 2aN based on both or any one of the maximum temperature value and the minimum temperature value determined by the temperature adjustment unit 2c. Thus, all of the temperature values T1 to TN respectively set in the search units 2a1 to 2aN may be appropriately determined. The temperature control unit 2b may use, for example, equation (2) and (3) to update the temperature values T1 to TN. The temperature adjustment unit 2c may calculate the temperature values T1 to TN based on the maximum temperature value and the minimum temperature value and output the calculated temperature values to the temperature control unit 2b.

[Third Embodiment]

Next, a third embodiment will be described. Items different from the first and second embodiments described above will be mainly described, and descriptions of the common items will be omitted.

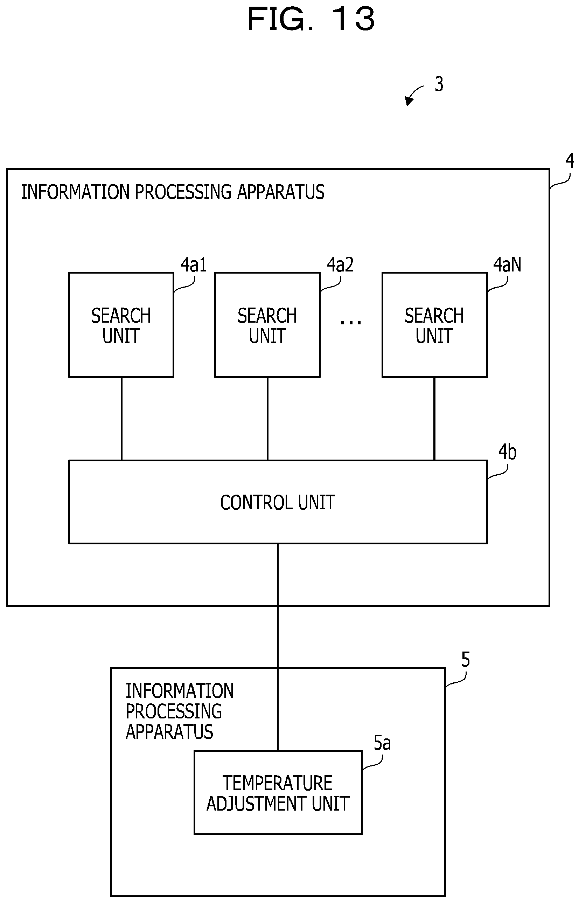

FIG. 13 is a diagram illustrating an example of an information processing system according to the third embodiment.

An information processing system 3 includes an information processing apparatus 4 and an information processing apparatus 5. The information processing apparatuses 4 and 5 are coupled via a predetermined input/output (IO) interface.

The information processing apparatus 4 is realized by, for example, a semiconductor integrated circuit such as an FPGA. The information processing apparatus 4 includes search units 4a1, 4a2, ..., 4aN and a control unit 4b. The search units 4a1 to 4aN correspond to the search units 1a1 to 1aN of the first embodiment, and have the same functions as the search units 1a1 to 1aN. The control unit 4b corresponds to the control unit 1b of the first embodiment, and has the same function as the control unit 1b.

The information processing apparatus 5 is realized by, for example, a computer. The information processing apparatus 5 includes A temperature adjustment unit 5a. The temperature adjustment unit 5a corresponds to the temperature adjustment unit 1c of the first embodiment, and has the same function as the temperature adjustment unit 1c.

The temperature adjustment unit 5a acquires temperature values T1 to TN set in the search units 4a1 to 4aN by the control unit 4b from the information processing apparatus 5. The temperature adjustment unit 5a acquires, from the information processing apparatus 5, a plurality of energy values obtained by the search units 4a1 to 4aN. The temperature adjustment unit 5a calculates an exchange probability of replica exchange based on a pair of energy values corresponding to a pair of search units, and determines temperature values to be set in the search units 4a1 to 4aN by the control unit 4b based on the calculated exchange probability. As a specific method of determining the temperature values, the method exemplified in FIG. 3 may be used.

As illustrated in FIG. 13, the third embodiment is different from the first and second embodiments in that the search units 4a1, 4a2, ..., 4aN and the control unit 4b are provided in the information processing apparatus 4 and that the temperature adjustment unit 5a is provided in the information processing apparatus 5 different from the information processing apparatus 4.

Next, hardware of the information processing apparatus 5 will be exemplified.

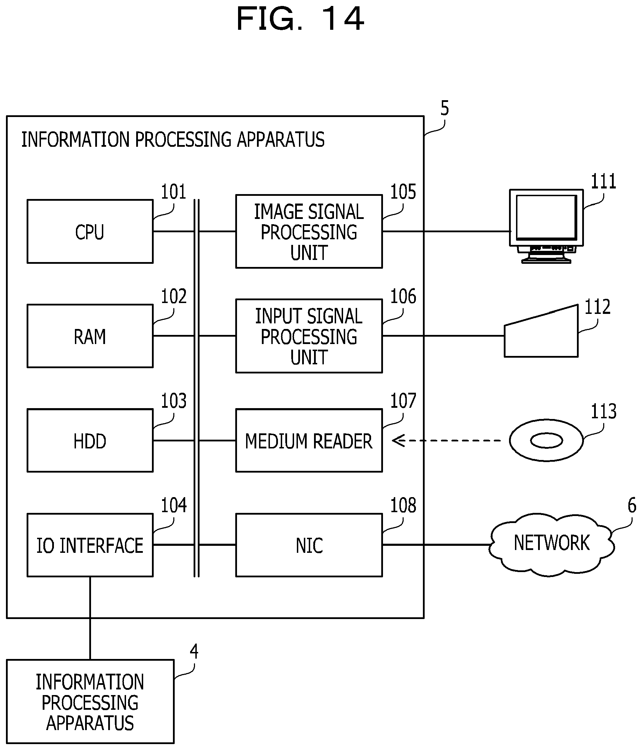

FIG. 14 is a diagram illustrating an example of hardware of the information processing apparatus.

The information processing apparatus 5 includes a central processing unit (CPU) 101, a random-access memory (RAM) 102, a hard disk drive (HDD) 103, an IO interface 104, an image signal processing unit 105, an input signal processing unit 106, a medium reader 107, and a network interface card (NIC) 108.

The CPU 101 is a processor that executes a program command. The CPU 101 loads at least a part of a program or data stored in the HDD 103 into the RAM 102, and executes the program. The CPU 101 may include a plurality of processor cores. The information processing apparatus 5 may include a plurality of processors. A set of the plurality of processors may be referred to as a "multiprocessor" or simply a "processor". The temperature adjustment unit 5a is realized by the CPU 101.

The RAM 102 is a volatile semiconductor memory which temporarily stores the program executed by the CPU 101 and data used for the operation by the CPU 101. The information processing apparatus 5 may include a type of memory other than the RAM, and may include a plurality of memories. The RAM 102 is used as a storage unit that stores data stored in the register 32 of the second embodiment.

The HDD 103 is a non-volatile storage device that stores software programs, such as an operating system (OS), middleware, and application software, and data. The information processing apparatus 5 may include other types of storage devices such as a flash memory and a solid-state drive (SSD), and may include a plurality of non-volatile storage devices.

The IO interface 104 is coupled to the information processing apparatus 4, and outputs and inputs data to and from the information processing apparatus 4 in accordance with an instruction from the CPU 101. For example, the IO interface 104 writes data in the RAM 102 to a register or a memory of the information processing apparatus 4 or reads data from the information processing apparatus 4 and writes the data to the RAM 102 in accordance with an instruction from the CPU 101. As the IO interface 104, for example, a Peripheral Component Interconnect Express (PCI-e) or the like is used.

The image signal processing unit 105 outputs an image to a display 111 coupled to the information processing apparatus 5 in accordance with an instruction from the CPU 101. As the display 111, an arbitrary type of display such as a cathode ray tube (CRT) display, a liquid crystal display (LCD), a plasma display, or an organic electro-luminescence (OEL) display, may be used.

The input signal processing unit 106 acquires an input signal from an input device 112 coupled to the information processing apparatus 5, and outputs the input signal to the CPU 101. As the input device 112, a pointing device such as a mouse, a touch panel, a touch pad, or a trackball, a keyboard, a remote controller, a button switch, or the like may be used. A plurality of types of input devices may be coupled to the information processing apparatus 5.

The medium reader 107 is a reading device that reads a program or data stored in a recording medium 113.

As the recording medium 113, for example, a magnetic disk, an optical disc, a magneto-optical (MO) disk, a semiconductor memory, or the like may be used. The magnetic disk includes a flexible disk (FD), an HDD, and the like. The optical disk includes a compact disc (CD) and a digital versatile disc (DVD).

For example, the medium reader 107 copies the program or data read from the recording medium 113 into another recording medium such as the RAM 102 or the HDD 103. The read program is executed by, for example, the CPU 101. The recording medium 113 may be a portable recording medium and is used to distribute the program and the data in some cases. The recording medium 113 and the HDD 103 are referred to as computer-readable recording media in some cases.

The NIC 108 is an interface that is coupled to a network 6 and communicates with another computer via the network 6. The NIC 108 is coupled to a communication device such as a switch or a router included in the network 6, by a cable, for example.

The information processing apparatus 4 is an accelerator that performs a ground state search by a replica exchange method by hardware based on information of an energy function. The information processing apparatus 4 may also be referred to as an Ising machine, an optimization apparatus, or the like. Instead of the information processing apparatus 4, the CPU 101 may execute predetermined software to realize functions of a plurality of search units and a temperature control unit that execute the replica exchange method.

In the information processing system 3 according to the third embodiment, the temperature adjustment unit 5a adjusts temperature values set in the search units 4a1 to 4aN by the control unit 4b in the same manner as the temperature adjustment units 1c and 2c. Thus, as in the first and second embodiments, the temperature values to be set in the search units 4a1 to 4aN may be appropriately determined.

The functions of the search units 2a1 to 2aN, the temperature control unit 2b, the temperature adjustment unit 2c, and the overall control unit 2d according to the second embodiment may be realized by causing the CPU 101 to execute a program. The function of the temperature adjustment unit 5a according to the third embodiment may be realized by causing the CPU 101 to execute a program. The program may be stored in the computer-readable recording medium 113.

For example, the program may be distributed by distributing the recording medium 113 recording the program. The program may be stored in another computer and the program may be distributed via the network. For example, the computer may store (install) the program recorded in the recording medium 113 or a program received from another computer in a storage device, such as the RAM 102 or the HDD 103, and may read the program from the storage device and execute the program.

**Claims**

1. An information processing apparatus comprising:

   a plurality of search units configured to search for a ground state of energy values represented by a plurality of state variables by using temperature values different from each other;
   a control unit configured to exchange values of the plurality of state variables or the temperature values between a pair of search units including two search units included in the plurality of search units, based on an exchange probability corresponding to a pair of the energy values obtained by the pair of search units.

2. The information processing apparatus according to claim 1, further comprising:
   a temperature adjustment unit configured to determine the temperature values based on the exchange probability.

3. The information processing apparatus according to claim 2, wherein the temperature adjustment unit compares the exchange probability with a threshold and determines both or any one of a maximum temperature value and a minimum temperature value in accordance with the comparison.

4. The information processing apparatus according to claim 2, wherein the temperature adjustment unit compares the exchange probability corresponding to the pair of search units with a first threshold in descending order of the temperature values, and determines the maximum temperature value based on the exchange probability of the pair of search units in which the exchange probability first becomes smaller than the first threshold.

5. The information processing apparatus according to claim 2, wherein the temperature adjustment unit compares the exchange probability corresponding to the pair of search units with a second threshold in ascending order of the temperature values, and determines the minimum temperature value based on the exchange probability of the pair of search units in which the exchange probability first becomes larger than the second threshold.

6. The information processing apparatus according to claim 2, wherein the temperature adjustment unit determines the temperature values based on an average value of a plurality of the exchange probabilities obtained within a predetermined period.

7. The information processing apparatus according to claim 2, wherein the temperature adjustment unit calculates the exchange probability based on a pair of temperature values corresponding to the pair of search units and a pair of average energy values obtained by the pair of search units.

8. The information processing apparatus according to claim 3, wherein the control unit updates a plurality of the temperature values set in the plurality of search units based on both or any one of the maximum temperature value and the minimum temperature value determined by the temperature adjustment unit.

9. An information processing method comprising:

    searching for, by a plurality of search units, a ground state of energy values represented by a plurality of state variables by using temperature values different from each other;
    exchanging values of the plurality of state variables or the temperature values between a pair of search units including two search units included in the plurality of search units, based on an exchange probability corresponding to a pair of the energy values obtained by the pair of search units.

10. The information processing method according to claim 9, further comprising:
    determining the temperature values based on the exchange probability.

11. The information processing method according to claim 10, further comprising:
    comparing the exchange probability with a threshold and determines both or any one of a maximum temperature value and a minimum temperature value in accordance with the comparison.

12. An information processing program excited by the computer, the information processing program comprising:

    searching for, by a plurality of search units, a ground state of energy values represented by a plurality of state variables by using temperature values different from each other;
    exchanging values of the plurality of state variables or the temperature values between a pair of search units including two search units included in the plurality of search units, based on an exchange probability corresponding to a pair of the energy values obtained by the pair of search units.

13. The information processing program according to claim 12, further comprising:
    determining the temperature values based on the exchange probability.

14. The information processing program according to claim 13, further comprising:
    comparing the exchange probability with a threshold and determines both or any one of a maximum temperature value and a minimum temperature value in accordance with the comparison.

15. An information processing program excited by the computer, the information processing program comprising:

    acquiring a plurality of energy values from an information apparatus including a plurality of search units and a control unit, the plurality of energy values being acquired by the plurality of search units, the plurality of search units search for a ground state of energy values represented by a plurality of state variables by using temperature values different from each other, the control unit exchanges values of the plurality of state variables or the temperature values between a pair of search units including two search units included in the plurality of search units, based on an exchange probability corresponding to a pair of the energy values obtained by the pair of search units; and
    determining the temperature values based on the exchange probability.

# FIG. 1

INFORMATION PROCESSING APPARATUS

1

1a1
SEARCH UNIT

1a2
SEARCH UNIT

...

1aN
SEARCH UNIT

1b
CONTROL UNIT

1c
TEMPERATURE ADJUSTMENT UNIT

# FIG. 2

EXAMPLE OF RELATIONSHIP BETWEEN NUMBER OF ITERATIONS AND
TEMPERATURE VALUE OF EACH SEARCH UNIT

# FIG. 3

EXAMPLE OF RELATIONSHIP BETWEEN TEMPERATURE VALUE
AND AVERAGE ENERGY VALUE

# FIG. 4

# FIG. 5

SEARCH UNIT 2a1

SEARCH UNIT 2a2

SEARCH UNIT 2aN

TEMPERATURE ADJUSTMENT UNIT 2c

EXCHANGE PROBABILITY CALCULATION UNIT 31

REGISTER 32

EXCHANGE PROBABILITY THRESHOLD CONFIRMATION UNIT 33

TEMPERATURE CONTROL UNIT 2b

TEMPERATURE DETERMINATION UNIT 34

FIG. 6

NUMBER OF ITERATIONS

TEMPERATURE ADJUSTMENT PERIOD

OPTIMIZATION PROCESSING AFTER
TEMPERATURE ADJUSTMENT

ST1  ST2  ST3  ST4  ST5  · · ·

eg
VALUE

eg
VALUE

eg
VALUE

eg
VALUE

EXCHANGE
PROBABILITY
CALCULATION

EXCHANGE
PROBABILITY
CALCULATION

EXCHANGE
PROBABILITY
CALCULATION

EXCHANGE
PROBABILITY
CALCULATION

DETERMINE MAXIMUM
TEMPERATURE VALUE
AND MINIMUM
TEMPERATURE VALUE

S2

CALCULATE
AVERAGE OF
EXCHANGE
PROBABILITIES

S1

UNIT PERIOD

REPLICA
EXCHANGE

EP 3 872 656 A1

# FIG. 7

TEMPERATURE ADJUSTMENT UNIT — 2c

eg_i_t

T_i_t

EXCHANGE PROBABILITY CALCULATION UNIT — 31

p_ave_i_{t-1}

p_ave_i_t

REGISTER — 32

EXCHANGE PROBABILITY THRESHOLD CONFIRMATION UNIT — 33

TEMPERATURE DETERMINATION UNIT — 34

MAXIMUM AND MINIMUM TEMPERATURES

REGISTER

p_ave_0_t
p_ave_1_t
...
P_ave_{N-2}_t

24

# FIG. 8

TEMPERATURE ADJUSTMENT UNIT 2c

eg_i_t

T_i_t

EXCHANGE PROBABILITY CALCULATION UNIT 31

$p\_i\_\{t-M+1\}$
$\sim p\_i\_\{t-1\}$

p_ave_i_t

p_i_t 33

REGISTER 32

EXCHANGE PROBABILITY THRESHOLD CONFIRMATION UNIT

TEMPERATURE DETERMINATION UNIT 34

MAXIMUM AND MINIMUM TEMPERATURES

REGISTER

$p\_0\_t \; \cdots \; p\_0\_\{t-M+1\}$
$p\_1\_t \; \cdots \; p\_1\_\{t-M+1\}$
$\cdots$
$p\_\{N-2\}\_t \; \cdots \; p\_\{N-2\}\_\{t-M+1\}$

# FIG. 9

```
        ┌─────────────────────────────────┐
        │   OVERALL CONTROL PROCESSING    │
        │       OF REPLICA EXCHANGE       │
        └─────────────────────────────────┘
                        │
                        ▼
        ┌─────────────────────────────────┐
        │ ACQUIRE INITIAL TEMPERATURE FROM OUTSIDE │ ～ S1
        └─────────────────────────────────┘
                        │
                        ▼
        ┌─────────────────────────────────┐
        │       SEARCH PROCESSING         │ ～ S2
        └─────────────────────────────────┘
                        │
                        ▼
        ┌─────────────────────────────────┐
        │    DATA COLLECTION PROCESSING   │ ～ S3
        └─────────────────────────────────┘
                        │
                        ▼
        ┌─────────────────────────────────┐
        │  TRANSMIT ENERGY VALUES OF EACH PAIR OF │ ～ S4
        │      ADJACENT SEARCH UNITS      │
        └─────────────────────────────────┘
                        │
                        ▼
        ┌─────────────────────────────────┐
        │    EXCHANGE CONTROL PROCESSING  │ ～ S5
        └─────────────────────────────────┘
                        │                      S6
                        ▼
        ╱─────────────────────────────────╲
        ╲  IS IT WITHIN TEMPERATURE ADJUSTMENT  ╱ ── YES
        ╱           PERIOD?               ╲
        ╲─────────────────────────────────╱
                        │ NO
                        ▼
        ┌─────────────────────────────────┐
        │ TEMPERATURE CALCULATION BASED ON THRESHOLD │ ～ S7
        │     OF EXCHANGE PROBABILITY     │
        └─────────────────────────────────┘
                        │
                        ▼
        ┌─────────────────────────────────┐
        │       SEARCH PROCESSING         │ ～ S8
        └─────────────────────────────────┘
                        │
                        ▼
        ┌─────────────────────────────────┐
        │  TRANSMIT ENERGY VALUES OF EACH PAIR OF │ ～ S9
        │      ADJACENT SEARCH UNITS      │
        └─────────────────────────────────┘
                        │
                        ▼
        ┌─────────────────────────────────┐
        │    EXCHANGE CONTROL PROCESSING  │ ～ S10
        └─────────────────────────────────┘
                        │                      S11
                        ▼
        ╱─────────────────────────────────╲
        ╲  IS THERE NO CHANGE IN STATE OF MINIMUM  ╱ ── NO
        ╱  TEMPERATURE VALUE PREDETERMINED  ╲
        ╲       NUMBER OF TIMES?          ╱
        ╲─────────────────────────────────╱
                        │ YES
                        ▼
                    ┌────────┐
                    │  END   │
                    └────────┘
```

# FIG. 10

```
      ┌─────────────────────┐
      │    START SEARCH      │
      │    PROCESSING        │
      └─────────┬───────────┘
                │                            S20
                ▼
  ┌──────────────────────────────────────────┐
  │  SET TEMPERATURE IN EACH SEARCH UNIT      │
  └─────────────────┬────────────────────────┘
                    │                          S21
                    ▼
  ┌──────────────────────────────────────────┐
  │            CALCULATE ΔE                    │
  └─────────────────┬────────────────────────┘
                    │                          S22
                    ▼
  ┌──────────────────────────────────────────┐
  │        SELECT BIT TO BE INVERTED          │
  └─────────────────┬────────────────────────┘
                    │                          S23
                    ▼
  ┌──────────────────────────────────────────┐
  │             UPDATE STATE                   │
  └─────────────────┬────────────────────────┘
                    │                          S24
                    ▼
  ◁────────── HAS UNIT PERIOD ENDED? ──────────▷  NO
                    │ YES                       S25
                    ▼
  ┌──────────────────────────────────────────┐
  │  CALCULATE ENERGY VALUE BY EACH SEARCH UNIT│
  └─────────────────┬────────────────────────┘
                    │
                    ▼
              ┌───────────┐
              │    END     │
              └───────────┘
```

# FIG. 11

START DATA COLLECTION
PROCESSING

S30

IS IT DATA COLLECTION TIMING?

NO

YES

S31

REPEAT FOR ALL PAIRS OF TEMPERATURE VALUES

S32

CALCULATE REPLICA EXCHANGE PROBABILITY

S33

END REPETITION

END

# FIG. 12

START EXCHANGE
CONTROL PROCESSING

S40

ARE TEMPERATURES OF EVEN-
NUMBERED SEARCH UNIT AND
SEARCH UNIT OF HIGHER
(OR LOWER) TEMPERATURE TO
BE EXCHANGED?

YES → S41 PERFORM EXCHANGE

NO

S42

ARE TEMPERATURES OF ODD-
NUMBERED SEARCH UNIT AND
SEARCH UNIT OF HIGHER (OR
LOWER) TEMPERATURE TO BE
EXCHANGED?

YES → S43 PERFORM EXCHANGE

NO

END

# FIG. 13

3

INFORMATION PROCESSING APPARATUS

4

| | | |
|---|---|---|
| SEARCH UNIT 4a1 | SEARCH UNIT 4a2 ... | SEARCH UNIT 4aN |

CONTROL UNIT 4b

INFORMATION PROCESSING APPARATUS

5

TEMPERATURE ADJUSTMENT UNIT 5a

# FIG. 14

INFORMATION PROCESSING APPARATUS 5

CPU 101

RAM 102

HDD 103

IO INTERFACE 104

IMAGE SIGNAL PROCESSING UNIT 105

INPUT SIGNAL PROCESSING UNIT 106

MEDIUM READER 107

NIC 108

111

112

113

NETWORK 6

INFORMATION PROCESSING APPARATUS 4

Europäisches
Patentamt

European
Patent Office

Office européen
des brevets

**EUROPEAN SEARCH REPORT**

Application Number

EP 21 15 1104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAVARRO CRISTÓBAL A ET AL: "Adaptive multi-GPU Exchange Monte Carlo for the 3D Random Field Ising Model", COMPUTER PHYSICS COMMUNICATION, ELSEVIER SCIENCE PUBLISHERS B.V., AMSTERDAM, NL, vol. 205, 27 April 2016 (2016-04-27), pages 48-60, XP029560587, ISSN: 0010-4655, DOI: 10.1016/J.CPC.2016.04.007 * page 50 * | 1-15 | INV. G06F17/11 G06N5/00 |
| A | LI Y ET AL: "Hybrid parallel tempering and simulated annealing method", APPLIED MATHEMATICS AND COMPUTATION, ELSEVIER, US, vol. 212, no. 1, June 2009 (2009-06), pages 216-228, XP026085856, ISSN: 0096-3003, DOI: 10.1016/J.AMC.2009.02.023 [retrieved on 2009-03-10] * the whole document * | 1-15 | |
| A | DING-JUN CHEN ET AL: "Parallelizing simulated annealing algorithms based on high-performance computer", JOURNAL OF GLOBAL OPTIMIZATION, KLUWER ACADEMIC PUBLISHERS, DO, vol. 39, no. 2, 20 February 2007 (2007-02-20), pages 261-289, XP019529771, ISSN: 1573-2916, DOI: 10.1007/S10898-007-9138-0 * the whole document * | 1-15 | TECHNICAL FIELDS SEARCHED (IPC) G06F G06N |

-/--

The present search report has been drawn up for all claims

| Place of search | Date of completion of the search | Examiner |
|---|---|---|
| Berlin | 24 June 2021 | Huguet Serra, G |

EPO FORM 1503 03.82 (P04C01)

page 1 of 2

Europäisches
Patentamt

European
Patent Office

Office européen
des brevets

**EUROPEAN SEARCH REPORT**

Application Number

EP 21 15 1104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Felix Jan ET AL: "A combined computational-experimental approach to study structure-function relationships in Interleukin 34, a novel cytokine", MSc Thesis, 2010, pages 1-145, XP055817658, Gent, Belgium Retrieved from the Internet: URL:https://molmod.ugent.be/sites/default/files/MT_JFelix.pdf [retrieved on 2021-06-24] * chapter 4 * | 1-15 | |

TECHNICAL FIELDS
SEARCHED      (IPC)

The present search report has been drawn up for all claims

| Place of search | Date of completion of the search | Examiner |
|---|---|---|
| Berlin | 24 June 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008140210 A
- JP 9231197 A